# EUROPEAN PATENT APPLICATION

(11) **EP 3 971 851 A1**
(43) Date of publication of application: **23.03.2022**
(21) Application number: 20197386.4
(22) Date of filing: 22.09.2020
(51) Int. Cl.: G07F 19/00, G06Q 20/42, G06Q 20/40, G06Q 20/32

(54) **AN ELECTRONIC DEVICE, METHOD AND COMPUTER PROGRAM PRODUCT FOR INSTRUCTING PERFORMANCE OF A TRANSACTION WHICH HAS BEEN REQUESTED AT AN AUTOMATED TELLER MACHINE**

(71) Applicant: IPCO 2012 Limited, London EC4R 3AB (GB)
(72) Inventor: McGUIRE, Terence, London, TW9 2JR (GB); GHUMAN-KARU, Panchali, London (GB); MURDOCH, Karen Lynette, North York (GB); MITCHELL, George William, North York (GB)
(74) Representative: D Young & Co LLP

(57) **Abstract**

An electronic device for instructing performance of a transaction which has been requested at an automated teller machine is provided, the electronic device comprising circuitry configured to: receive a transaction request, requesting a transaction, in response to a user initiating a transaction at an automated teller machine, the transaction request conforming to a transaction request protocol and including at least a first field for the value of the transaction and a second field for identification of an account for which the transaction is requested; retrieve from storage, based on the transaction request, an electronic device identifier associated with the account for which the transaction is requested; determine whether authentication of the user should be requested based at least on a property of the requested transaction; and, when it is determined that authentication of the user should be requested, the circuitry is further configured to: transmit a request for authentication of the user to the electronic device identified by the electronic device identifier; and transmit a transaction instruction to the automated teller machine based on a condition of a response to the request for authentication of the user.

## Description

### BACKGROUND

### Field of the Disclosure

The present invention relates to an electronic device, method and computer program product for instructing performance of a transaction which has been requested at an automated teller machine.

### Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present invention.

Automated banking machines, such as an automated teller machine, enable customers to perform certain transactions with an associated banking account without human involvement. The type of transaction which can be performed by the customer depends upon the both the hardware and software of the automated teller machine and the types of transactions which are offered or provided by the financial institution (e.g. a bank) which operates the customer's associated account.

Automated teller machines are typically connected to a network which enables the automated teller machine to communicate with a financial institution in order to perform the aforementioned transactions. In a typical economy, such as the UK, the automated teller machine network may be responsible for a significant number of transactions (typically, billions of individual transactions per year).

However, fraud prevention at an automated teller machine is particularly challenging. In certain examples, a fraudster may exploit techniques such as card skimming in order to obtain an illegitimate copy of a victim's bank card. The fraudster may then use the copy of the bank card in order to perform transactions (such as a cash withdrawal) from the victim's bank account. In other examples, a fraudster may physically capture a victim's bank card using a card trapping device, such that the victim's bank card can be used in a subsequent fraudulent transaction.

Fraudulent transactions such as these may result in significant losses to both the economy and, in certain situations, the victim.

Furthermore, in certain situations, there may be significant delay between the occurrence of the fraudulent transaction and its subsequent identification or detection as a fraudulent transaction. That is, a bank's analysis of automated teller transactions may occur a significant period of time after the transaction has been authorised at the automated teller machine (in some situations, up to 24 hours after the transaction has occurred). Likewise, there may be significant delay before a victim realises that a fraudster has performed a fraudulent transaction on their account. In certain instances, the fraudulent transaction may even remain undetected.

The delay in detection of fraudulent transactions enables the fraudster to disperse the funds which have been illegitimately obtained through the fraudulent transaction. This makes it very difficult to recover the funds lost through fraudulent transactions.

Certain actions can be taken by a victim at the automated teller machine in order to make it more difficult for a fraudster to fraudulently exploit an account (e.g. the victim may attempt to conceal their personal identification number (PIN) when entering the PIN into the automated teller machine). However, fraudsters are becoming more sophisticated in their techniques, and as such, a technical solution for the reduction of fraud at automated teller machines is required.

It is an aim of the present disclosure to address these issues.

### SUMMARY

In a first aspect of the present disclosure, there is an electronic device for instructing performance of a transaction which has been requested at an automated teller machine, the electronic device comprising circuitry configured to: receive a transaction request, requesting a transaction, in response to a user initiating a transaction at an automated teller machine, the transaction request conforming to a transaction request protocol and including at least a first field for the value of the transaction and a second field for identification of an account for which the transaction is requested; retrieve from storage, based on the transaction request, an electronic device identifier associated with the account for which the transaction is requested; determine whether authentication of the user should be requested based at least on a property of the requested transaction; and, when it is determined that authentication of the user should be requested, the circuitry is further configured to: transmit a request for authentication of the user to the electronic device identified by the electronic device identifier; and transmit a transaction instruction to the automated teller machine based on a condition of a response to the request for authentication of the user.

In a second aspect of the present disclosure, there is a method of instructing performance of a transaction which has been requested at an automated teller machine, the method comprising: receiving a transaction request, requesting a transaction, in response to a user initiating a transaction at an automated teller machine, the transaction request conforming to a transaction request protocol and including at least a first field for the value of the transaction and a second field for identification of an account for which the transaction is requested; retrieving from storage, based on the transaction request, an electronic device identifier associated with the account for which the transaction is requested; determining whether authentication of the user should be requested based at least on a property of the requested transaction; and, when it is determined that authentication of the user should be requested, the method further comprises: transmitting a request for authentication of the user to the electronic device identified by the electronic device identifier; and transmitting a transaction instruction to the automated teller machine based on a condition of a response to the request for authentication of the user.

In a third aspect of the present disclosure, there is a computer program product comprising instructions which, when the program is executed by the computer, cause the computer to carry out a method of instructing performance of a transaction which has been requested at an automated teller machine, the method comprising: receiving a transaction request, requesting a transaction, in response to a user initiating a transaction at an automated teller machine, the transaction request conforming to a transaction request protocol and including at least a first field for the value of the transaction and a second field for identification of an account for which the transaction is requested; retrieving from storage, based on the transaction request, an electronic device identifier associated with the account for which the transaction is requested; determining whether authentication of the user should be requested based at least on a property of the requested transaction; and, when it is determined that authentication of the user should be requested, the method further comprises: transmitting a request for authentication of the user to the electronic device identified by the electronic device identifier; and transmitting a transaction instruction to the automated teller machine based on a condition of a response to the request for authentication of the user.

According to embodiments of the disclosure, fraudulent transactions at an automated teller machine can be detected in a substantially real time environment, improving security of transactions performed at automated teller machines and reducing losses through fraudulent transactions. It will be appreciated that the present disclosure is not particularly limited to these technical effects, there may be others as will become apparent to the skilled person when reading the following disclosure.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 illustrates an apparatus for instructing performance of a transaction which has been requested at an automated teller machine in accordance with embodiments of the disclosure;
Figure 2A illustrates a configuration of processing circuitry in accordance with embodiments of the disclosure;
Figure 2B illustrates a configuration of transceiving circuitry in accordance with embodiments of the disclosure;
Figure 3 illustrates an example network to which an apparatus according to embodiments of the disclosure may be applied;
Figure 4 illustrates a user interface provided at a user's portable electronic device in accordance with embodiments of the disclosure;

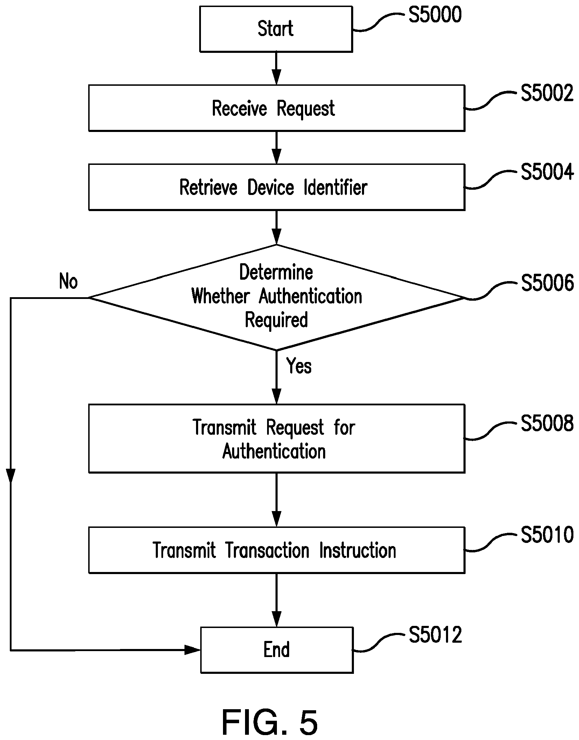

Figure 5 illustrates a method of instructing performance of a transaction which has been requested at an automated teller machine in accordance with embodiments of the disclosure;
Figure 6 illustrates an example network to which an apparatus according to embodiments of the disclosure may be applied.

### DESCRIPTION OF THE EMBODIMENTS

Referring now to the drawings, wherein like reference numerals designate identical or corresponding parts throughout the several views.

As noted above, it is desired that a technical solution for the detection and prevention of fraudulent automated teller machine transactions is provided. Accordingly, an apparatus for instructing performance of a transaction which has been requested at an automated teller machine is provided in accordance with embodiments of the disclosure.

### <Apparatus>

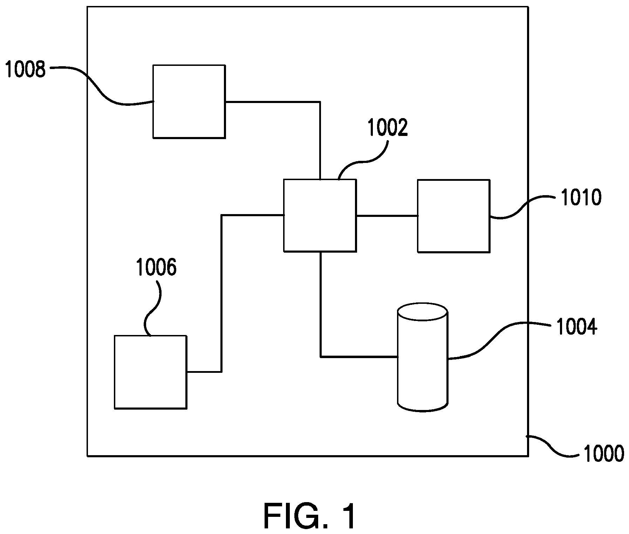

Referring now to Figure 1, an apparatus (or electronic device) in accordance with embodiments of the disclosure is illustrated. Typically, an apparatus 1000 according to embodiments of the disclosure is a computer device such as a personal computer or a terminal connected to a server. Indeed, in embodiments, the apparatus may also be a server. The apparatus 1000 is controlled using a microprocessor or other processing circuitry 1002. More generally, the apparatus 1000 is a data processing apparatus.

The processing circuitry 1002 may be a microprocessor carrying out computer instructions or may be an Application Specific Integrated Circuit. The computer instructions are stored on storage medium 1004 which may be a magnetically readable medium, optically readable medium or solid state type circuitry. The storage medium 1004 may be integrated into the apparatus 1000 or may be separate to the apparatus 1000 and connected thereto using either a wired or wireless connection. The computer instructions may be embodied as computer software that contains computer readable code which, when loaded onto the processor circuitry 1002, configures the processor circuitry 1002 to perform a method according to embodiments of the disclosure.

Additionally connected to the processor circuitry 1002, is a user input unit 1008. The user input unit 1008 may be a touch screen or may be a mouse or stylus type input device. The user input 1008 may also be a keyboard or any combination of these devices.

Communication circuitry 1006 is also coupled to the processing circuitry 1002. The communication circuitry 1006 may provide a connection to a Local Area Network or a Wide Area Network such as the Internet or a Virtual Private Network or the like. For example, the communication circuitry 1006 may be connected to infrastructure allowing the processor circuitry 1002 to communicate with other devices or infrastructure equipment in order to obtain or provide relevant data. For example, the communication circuitry 1006 may enable the apparatus 1000 to communicate with financial institutions in a banking network or the like. The communication circuitry 1006 may therefore be behind a firewall or some other form of network security.

Additionally coupled to the processing circuitry 1002, is a display device 1010. The display device, although shown integrated into the apparatus 1010, may be separate to the apparatus 1000 and may be an electronic display (e.g. liquid crystal display (LCD) or the like) or some kind of device allowing the user to visualise the operation of the system. In addition, the display device 1010 may be a printer or some other device allowing relevant information generated by the apparatus 1000 to be viewed by the user or by a third party.

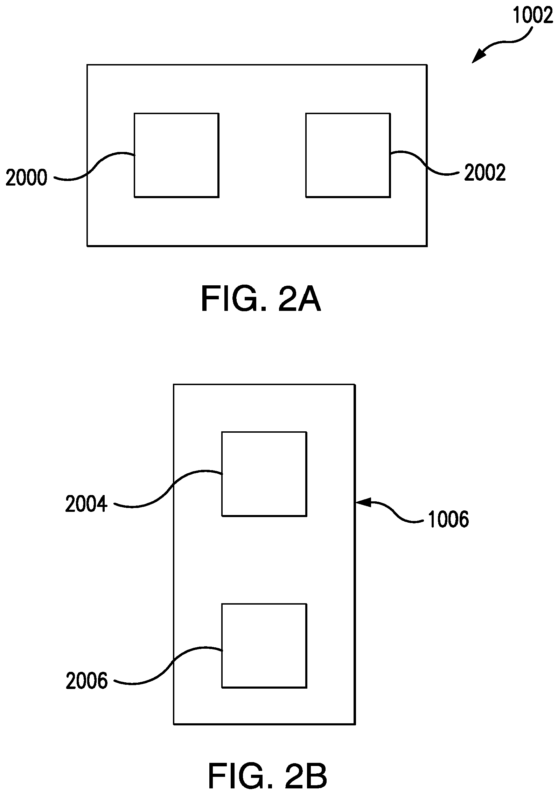

Referring now to Figure 2A, an example configuration of the processing circuitry 1002 of apparatus 1000 is illustrated. In this example, the processing circuitry 1002 of apparatus 1000 comprises a retrieving unit 2000 and a determination unit 2002.

Referring now to Figure 2B, an example configuration of the communication circuitry 1006 of apparatus 1000 is illustrated. In this example, the communication circuitry 1006 comprises a receiving unit 2004 and a transmitting unit 2006.

According to embodiments of the disclosure, receiving unit 2004 of apparatus 1000 is configured to receive a transaction request, requesting a transaction, in response to a user initiating a transaction at an automated teller machine, the transaction request conforming to a transaction request protocol and including at least a first field for the value of the transaction and a second field for identification of an account for which the transaction is requested. The retrieving unit 2000 is configured to receive from a storage, based on the transaction request, an electronic device identifier associated with the account for which the transaction is requested. The determination unit 2004, of apparatus 1000, is configured to determine whether authentication of the user should be requested based at least on a property of the requested transaction. When it is determined that authentication of the user should be requested, the transmission unit 2006 of apparatus 1000 is configured to transmit a request for authentication of the user to the electronic device identified by the electronic device identifier. Finally, the transmission unit 2006 is configured to transmit a transaction instruction to the automated teller machine based on a condition of a response to the request for authentication of the transaction.

The apparatus for instructing performance of a transaction which has been requested at an automated teller machine according to embodiments of the disclosure enables fraudulent transactions at an automated teller machine to be detected in a substantially real time environment, thus improving security of transactions performed at automated teller machines and reducing losses through fraudulent transactions (to both the individual consumer and to financial institutions (such as the consumer's bank).

Aspects of the above will now be described with reference to an example transaction at an automated teller machine located in a banking network.

### <Example Transaction>

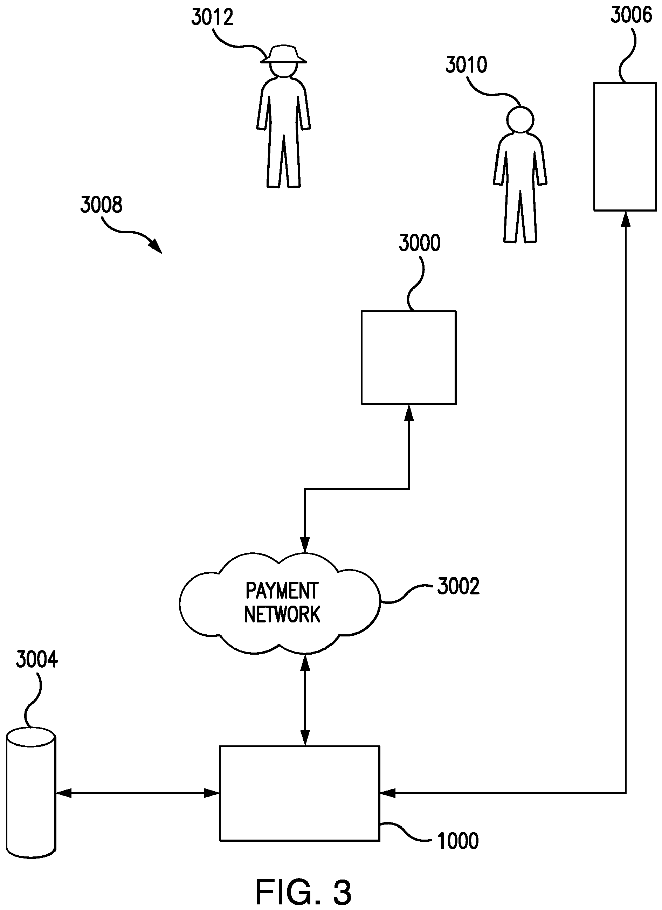

Referring now to Figure 3, an example network to which the apparatus according to embodiments of the disclosure may be applied is illustrated.

As shown in Figure 3, an apparatus 1000 (as described with reference to Figures 1 and 2 of the present disclosure) is provided in a network 3008. Apparatus 1000 may be connected via a payments network 3002 to an automated teller machine (ATM) 3000. Furthermore, storage 3004 (either internal or external (as illustrated) to apparatus 1000) may be provided. Finally, apparatus 1000 may be in communication with a portable electronic device 3006 of a consumer.

In an example situation, a consumer 3010 wishes to perform a transaction at the ATM 3000. That is, in this example, the consumer 3010 wishes to operate ATM 3000 in order to withdraw funds (e.g. cash) from a bank account the consumer holds with a financial institution (not shown). Accordingly, the consumer 3010 approaches the ATM 3000 and inserts a bank card into the ATM 3000. The consumer then performs a series of operations at the ATM in order to instruct a transaction (e.g. withdrawal of funds) from the consumer's bank account. In some situations, the operations performed by the consumer 3010 may be performed in response to certain prompts or instructions issued by the ATM 3000 to the consumer. For example, the consumer 3010 may be instructed to enter a personal identification number (PIN) in order to authorise the transaction. Moreover, the consumer may be instructed to select a certain amount of funds (e.g. cash) which the consumer 3010 wishes to withdraw.

Once the consumer 3010 has performed said desired operations at the ATM 3000, the ATM 3000 compiles a transaction request message on the basis of the information provided by the consumer 3010. Said transaction request message may, in certain examples, conform to a transaction request protocol (being a standard message format which is used by ATMs when communicating in a network such as network 3008). The transaction request message may include at least a transaction amount (being, in this example, the value of the funds which the consumer 3010 wishes to withdraw from their account) and an account identifier (identifying the account from which the consumer 3010 wishes the funds to be withdrawn). In some examples, the account identifier may be determined based on the bank card which the consumer 3010 inserted into the ATM 3000. The account identifier may be determined from a magnetic strip or smart chip on the bank card, for example. The manner of identification will depend both on the specific ATM and the bank card which has been issued to the consumer.

As noted above, in certain examples the consumer 3010 may have been prompted to enter a PIN in order to authorise the transaction. In some examples, the PIN may be included in the transaction request message (in encrypted form, such as a hash of the PIN) whereby it is confirmed by the financial institution when processing the transaction. In other examples, the PIN may be verified locally by the ATM 3000 prior to issuing the transaction request message. In this situation, the PIN entered by the consumer 3010 may be transformed and compared with an encrypted form of the PIN stored in the smart chip of the bank card. In either situation, when a PIN is required, the requested transaction will only be instructed when the correct PIN is entered by the consumer 3010.

The transaction request message generated by the ATM 3000 is then transmitted across the payment network 3002. The payment network 3002 may include network infrastructure (such as payment rails) required in order to securely connect a network of ATMs (such as ATM 3000) with corresponding financial institutions, such that transactions which are requested at the ATMs can be processed.

In this example, apparatus 1000 thus receives the transaction request message generated by ATM 3000 over the payment network 3002. In certain examples, the communication between the ATM and apparatus 1000 may be encrypted for additional security. In this case, apparatus 1000 possesses the security key required in order to decrypt the information received from the ATM.

Now, according to embodiments of the disclosure, when apparatus 1000 receives the transaction request message, it is configured to retrieve, from storage 3004, an electronic device identifier associated with the account for which the transaction is requested. This electronic device identifier may have been provided by consumer 3010 when establishing their bank account with the corresponding financial institution, for example. Alternatively, the consumer may have securely provided the electronic device identifier to the financial institution at any stage after establishing the account with the financial institution prior to the initiation of the requested transaction. As such, it will be appreciated that the storage (being either internal to apparatus 1000 or external to apparatus 1000) will store the bank account identifier of the customer's bank account (such as an IBAN or the like) alongside or in association with an electronic device identifier, such that one the account has been identified (based on the information received from the ATM) the corresponding electronic device identifier can be retrieved.

The form of the electronic device identifier which has been provided by the consumer 3010 and which is stored in storage 3004 is not particularly limited and may vary in accordance with the situation (including the type of electronic device which the consumer has registered with the account). The electronic device identifier enables the electronic device of the consumer to be uniquely identified. In some examples, this may be a mobile telephone number, for example. In other examples, this may be a unique device ID. Alternatively, this may be a number or code which enables the consumer's electronic device to be uniquely identified in association with software (e.g. an application or the like) which is stored on the consumer's electronic device.

Once the electronic device identifier has been retrieved from storage, the apparatus 1000 determines whether authentication of the user should be requested based at least on a property of the requested transaction.

It will be appreciated that while the transaction has been authorised by the consumer 3010 through entry of the PIN at the ATM 3000, there exists certain situations whereby the transaction request, even though accompanied by the correct PIN, is a fraudulent transaction. For example, a fraudster may have illegitimately obtained the PIN of the consumer 3010 and may thus have correctly entered the PIN when requesting the transaction at the ATM 3000. In fact, there are numerous mechanisms by which a fraudster may illegitimately obtain the PIN of a consumer. For example, a fraudster (such as fraudster 3012) may obtain the PIN through technical solutions such as 'skimming' whereby a camera or fake keypad illegitimately installed at the ATM record the PIN as it is entered by the consumer. Alternatively, a fraudster (such as fraudster 3012) may obtain the PIN merely from 'shoulder surfing' and watching as a hapless consumer enters their PIN into the ATM keypad.

Having illegitimately obtained the PIN, the fraudster may further acquire the bank card of the user. That is, in some situations, the fraudster may steal the bank card from the unsuspecting consumer. However, in more sophisticated attacks, the fraudster may acquire a copy (e.g. a clone) of the user's bank card. That is, details of the card may be skimmed from the user (e.g. at a tampered ATM (being an ATM whereby a fraudster has installed certain malicious hardware) and used in order to duplicate the card.

With both the bank card (or, that is, a clone of the bank card) and the associated PIN, a fraudster may then operate an ATM in order to perform a fraudulent transaction (e.g. fraudulently withdraw funds from a victims account).

As such, in certain situations, verification of the PIN is not sufficient to reduce fraudulent transactions at the ATM. Therefore, according to embodiments of the disclosure, in certain situations, additional authentication of the consumer is required in order to verify that the requested transaction is a legitimate transaction instructed by the consumer to whom the bank account held by the financial institution is owned.

Owing to the vast number of transactions which are instructed via an ATM, it is advantageous that additional authentication of the user is not sought for every individual transaction which is performed. Seeking additional authentication of the user for every individual ATM transaction may substantially increase the number of messages exchanged across a network (such as network 3008) and may cause unacceptable delays to the processing of ATM transactions. Rather, it is technically advantageous that the additional authentication of the consumer is sought only when apparatus 1000 determines that additional authentication is required.

As such, according to embodiments of the disclosure, in certain situations, apparatus 1000 may determine whether authentication of the user should be requested upon reception of the transaction request. The manner of determining whether authentication should be requested is not particularly limited, and may vary in accordance with the situation to which embodiments of the disclosure are applied.

For example, in certain situations, whether to request authentication of the transaction may be determined based on a geographical location of the ATM.

That is, in situations where the geographical location of the ATM from which the requested transaction originates is outside a certain region or location whereby the consumer's account is registered, it may be determined that additional authentication of the user is required. Alternatively, the consumer may register a list of 'favourite' ATMs or ATM locations, from which they wish to be able to perform transactions without providing any additional authentication. Then, only if the transaction is instructed from an ATM which is outside this location, will additional authentication be requested. However, in some situations, additional authentication may be requested even if the consumer uses a 'favourite' ATM if the requested transaction is particularly high risk (e.g. a request for a withdrawal of an unusually high value of funds from the account- or indeed, a sequence of suspicious lower value transactions).

As such, in this example (whereby the determination is made with respect to the geographical location of the ATM with respect to a location where the consumer's account is registered) certain consumer's may be able to use an ATM without additional authentication being requested, while other user's (whose accounts are registered further away) would not be able to use the ATM without additional authentication being provided. This ensures that additional authentication can be sought for fraudulent, or potentially fraudulent, transactions without substantially increasing the network and communication overheads required to process transactions from the ATM network.

In some situations, apparatus 1000 may determine whether authentication of the user should be requested is based on a fraud score calculated for the requested transaction. That is, apparatus 1000 may transmit the transaction request to a certain analytics provider for analysis of the requested transaction. If a fraud score is determined for the transaction which exceeds a given threshold value, it is likely that the transaction may be a fraudulent transaction. In this case, it may be determined that additional authentication of the consumer should be requested. A high fraud score may be calculated if the transaction is in respect of withdrawal of an unusually high volume of funds, for example. Alternatively, for example, a high fraud score may be calculated if a high level of recent activity has been identified from the consumer's account. Of course, it will be appreciated that the manner in which the fraud score is calculated is not particularly limited.

In some situations, apparatus 1000 may be configured to transmit a notification, such as a low bandwidth notification, to the electronic device associated with the account identifier requesting a location of the electronic device. In this situation, the apparatus 1000 may determine whether authentication of the user should be requested based the location of the electronic device which is subsequently reported by the electronic device. For example, if the reported geographical location of the electronic device associated with the user's account is outside a certain radius from the ATM, the apparatus 1000 may determine that additional authentication of the user is required before the transaction should be processed. The geographical location of the electronic device may, in certain examples, be obtained via a global positioning system or the like.

Alternatively, apparatus 1000 may, over time, train a machine learning model based on the transactions performed by the consumer. Indeed, the machine learning model may be trained based on previous transactions performed by a number of consumers. In fact, the machine learning model may be trained on a number of simulations of fraudulent transactions. Then, when a new requested transaction is entered into the machine learning model (including information such as the time of the transaction, the value of the transaction, the history of transactions from that account, the geographical location of the transaction and the like) the machine learning model may produce an indication as to whether the individual transaction is likely to be a fraudulent transaction. In the case whereby the outcome of the machine learning model in response to the requested transaction indicates that the requested transaction is a high risk transaction, apparatus 1000 may determine to request additional authentication of the user. In certain examples, the machine learning model may be implemented as a neural network or the like.

Moreover, in order to reduce unnecessary transaction delays, in certain examples apparatus 1000 may transmit a short message (such as a ping) to the electronic device. Then, only when a response to the ping is received within a predetermined time interval, will apparatus 1000 transmit the authentication request to the electronic device. This may avoid situations whereby request for authentication is transmitted to an electronic device which is unable, in its present state, to communicate with apparatus 1000. This may occur when the electronic device is switched off or out or range of a communication server.

Returning now to Figure 3, once apparatus 1000 has determined that additional authentication of the consumer is required, apparatus 1000 transmits a request for authentication to the electronic device identified by the electronic device identifier retrieved from storage 3004. The authentication request message (and indeed all communications between the apparatus 1000 and the electronic device 3006 of the consumer) may be performed over any suitable wireless network (e.g. a mobile telecommunication network or the like).

In the example transaction of Figure 3, consumer 3010 (who has initiated the transaction at ATM 3000) may then receive, via their electronic device 3006, a request for authentication for the requested transaction which has been initiated at the ATM 3000. Now, it will be appreciated that the form of the electronic device of the consumer 3010 is not particularly limited in accordance with embodiments of the disclosure. However, preferably, the electronic device is a portable electronic device such as a 'smart' mobile telephone, tablet, laptop computing device or the like. More generally, the electronic device 3006 may be any data processing apparatus being configured to perform the required functions and operations in response to the transaction request. That is, having received the request for authentication, the consumer may then operate their electronic device in order to provide additional authentication required in order for the requested transaction to proceed.

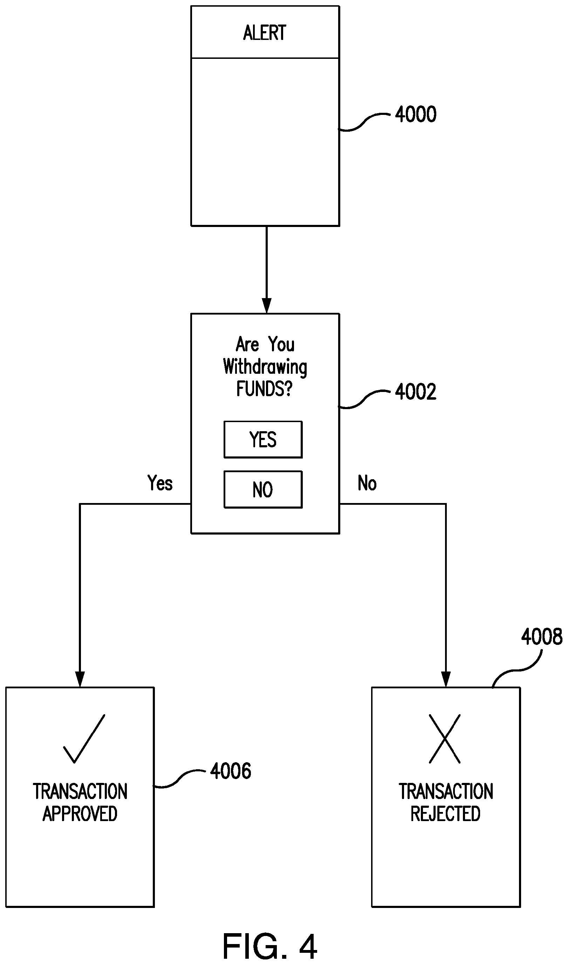

Figure 4 illustrates a user interface provided at a consumer's portable electronic device in accordance with embodiments of the disclosure. This is an example user interface such as that which may be provided to the consumer via electronic device 3006 in accordance with embodiments of the disclosure.

In display 4000, a message is presented to the consumer alerting the consumer that a transaction has been requested from an account associated with the consumer. This may be provided to the consumer's electronic device via a push notification or the like. In this case, a 'pop-up' message appears on the consumer's electronic device, independent of the operation which the consumer was performing, indicating to the consumer that an action is required.

When the consumer opens the push notification, the consumer may then be presented with a user interface such as that illustrated in 4002. Here, the user may be informed of the details of the requested transaction (including the time of the transaction, the location of the transaction and the value of the transaction, for example). The consumer may also be requested to indicate whether or not the transaction is a genuine transaction which the consumer has initiated, or whether the transaction is a fraudulent transaction of which the consumer is, at present, unaware of.

When the consumer operates an onscreen element (e.g. a button or the like) which indicates approval of the requested transaction, an authentication response indicating authentication of the consumer is transmitted to apparatus 1000. In this situation, the consumer may be presented with a user interface, such as that illustrated in 4006, indicating that the requested transaction has been approved.

In contrast, when the consumer operates an onscreen element (e.g. a button or the like) which indicates that the consumer has not initiated the reported transaction at the ATM 3000, an authentication response indicating that the consumer has not been authenticated is transmitted to apparatus 1000. In this situation, the consumer may be presented with a user interface such as that illustrated in 4008, indicating that the requested transaction has been blocked.

In this manner, only the consumer who possesses the electronic device registered to the account for which the ATM transaction is requested may provide the additional authentication required in order for the requested transaction to proceed. Of course, it will be appreciated that while the example of Figure 4 merely requires the consumer to be in possession of the electronic device (and thus be able to actuate the onscreen element (such as a button or the like) in order to provide authentication of the transaction) the present disclosure is not particularly limited in this regard. That is, in certain examples, the user may be required to perform a certain action on the electronic device (e.g. enter an additional password or the like) before authentication is transmitted to apparatus 1000. In fact, it will be appreciated that, often, operation of the electronic device itself may be restricted, such that only a user who can unlock the electronic device (through password entry, biometrics (e.g. fingerprint) or the like) can operate the electronic device. This further improves the security of the transaction.

Returning now to Figure 3, in accordance with embodiments of the disclosure, apparatus 1000 may be configured to and transmit a transaction instruction to the automated teller machine based on a condition of a response to the request for authentication of the consumer. This instruction may be transmitted to the ATM 3000 via the payment network 3002, for example. Moreover, this instruction may conform to a certain protocol for communications between the apparatus 1000 and the payment network 3002, such that the ATM 3000 can process the instruction.

The form of the instruction, in terms of the action which the instruction instructs the ATM 3000 to perform, will vary in accordance with the situation based upon a condition of a response for authentication of the consumer.

In some situations, the condition of the response may include a determination as to whether a response to the request for authentication of the consumer is received within a predetermined time of the request for authentication of the consumer. For example, apparatus 1000 may be configured to monitor an interval of time between the time which the authentication request was transmitted to the consumer and the time at which a response to the authentication request is received. That is, when a response to the request for authentication of the consumer is not received within the predetermined time, the transaction instruction may instruct the automated teller machine to perform the transaction. In this manner, the default position of apparatus 1000 may be to instruct the ATM 3000 to perform the transaction when no response is received from the electronic device. This reduces instances of significant delay to the transaction process while waiting for a response from the consumer. The time interval itself may vary in accordance with the situation to which embodiments of the disclosure are applied. In the case of repeated unauthorised transactions being requested, however, apparatus 1000 may be configured in order to dynamically adjust the default position for the ATM (or the ATM with respect to the specific account of the user) such that no further transactions may occur from that account prior to reception of a successful authentication response.

It will be appreciated that in such situation, whereby the transaction is authorised owing to a lack of response from the electronic device, the transaction may be flagged as a transaction for which successful authentication was not obtained. Moreover, apparatus 1000 may be configured to continue to monitor for an authentication response from the consumer after the transaction has been performed by the ATM. When an authentication response is received from the electronic device after the transaction has been performed, the transaction can be subsequently recorded as a legitimate transaction. However, in the event that an authentication response is received from the electronic device after the transaction has been performed, the transaction may be retrospectively recorded as a fraudulent transaction. At this stage, the consumer's account may be frozen, for example, in order to prevent any further fraudulent activity from occurring. Moreover, certain steps may be initiated in order to retrieve the funds of the fraudulent transaction.

As such, even in the event whereby it is determined that additional authentication should be requested yet a response to the authentication request is not received within the predetermined time interval, the apparatus 1000 according to embodiments of the disclosure is able to improve the security of ATM transactions. This situation may occur in an event whereby a consumer legitimately attempts to perform a transaction at a time when they are unable to access their electronic device (the electronic device being not in their possession, or the electronic device being out of electrical power, for example). Alternatively, this situation may occur when a fraudster attempts to fraudulently exploit an account, yet, at that time, the consumer (being the legitimate owner of the account (and its associated funds)) is unable to access their electronic device in order to reject the transaction.

Of course, in many situations, a response to the request for authentication will be received from the electronic device of the consumer within the predetermined time interval. Now, in a situation when a response to the request for authentication of the consumer is received within the predetermined time, and when the response is indicative of an unsuccessful authentication of the consumer (as described with reference to Figure 4 of the present disclosure, for example) the transaction instruction produced by apparatus 1000 may instruct the automated teller machine not to perform the transaction.

In such a situation, the ATM 3000 may display a message informing its operator (the suspected fraudster 3012) that the transaction has been declined. Alternatively or in addition, the ATM 3000 may retain the bank card which has been inserted by the suspected fraudster. This prevents the fraudster from engaging in any further fraudulent activity with the bank card. Alternatively, in a situation whereby the ATM includes a security camera, the instruction received from apparatus 1000 may instruct the ATM to capture an image of the suspected fraudster 3012. This may then be used in order to aid the identification of the suspected fraudster.

In other situations, such as when authentication of the consumer is received within the predetermined time, and when the response is indicative of a successful authentication of the consumer, the transaction instruction instructs the automated teller machine to perform the transaction. That is, even though it was determined that the additional authentication of the consumer was required (owing to the consumer accessing an ATM in an unusual or unexpected location, for example) the transaction can be performed once the consumer has used their electronic device in order to provide additional authentication.

Of course, even in situations whereby successful authentication has been received from the consumer's electronic device, the transaction may not proceed until the transaction request is, itself, successfully authorized. As described above, successfully authorizing the transaction may include, for example, the consumer entering the correct PIN in the ATM 3000 at the time of initiating the transaction. As such, only the consumer who is in possession of the electronic device and who knows the PIN for the account identified by the bank card can successfully operate the ATM in order to perform a transaction.

Therefore, even in a situation whereby a fraudster, such as fraudster 3012, illegitimately obtains the consumer's bank card (or a copy thereof) and the associated PIN, the fraudster will not be able to operate an ATM (such as ATM 3000) in order to perform a transaction (e.g. a withdrawal of funds) without being in possession of the electronic device (e.g. electronic device 3006) of the user. This increases the security of ATM transactions and reduces instances of ATM fraud. Moreover, through the substantially real time verification of the present disclosure, the delay for detection of the fraudulent ATM transaction can be substantially reduced, limiting the ability of the fraudster to distribute the funds of the fraudulent transaction.

Of course, while the apparatus 1000 has been described with reference to the example transaction initiated by consumer 3010, it will be appreciated that the present disclosure is not particularly limited in this regard. Moreover, while certain aspects of the present disclosure has been described with reference to a situation whereby a consumer attempts to withdraw funds (e.g. cash) from a bank account using an ATM, it will be appreciated that the present disclosure is not so limited in this regard. That is, any such transaction which can be performed by a consumer at an ATM can be monitored in accordance with embodiments of the present disclosure in order to reduce levels of fraudulent ATM activity.

### <Method>

Hence, more generally, a method of instructing performance of a transaction which has been requested at an automated teller machine in accordance with embodiments of the disclosure is illustrated.

The method starts at step S500 and proceeds to step S5002.

In step S5002, the method comprises receiving a transaction request, requesting a transaction, in response to a user initiating a transaction at an automated teller machine, the transaction request conforming to a transaction request protocol and including at least a first field for the value of the transaction and a second field for identification of an account for which the transaction is requested.

Once the transaction request has been received, the method proceeds to step S5004.

In step S5004, the method comprises retrieving from a storage, based on the transaction request, an electronic device identifier associated with the account for which the transaction is requested.

Once the transaction request has been received, the method proceeds to step S5006.

In step S5006, the method comprises determining whether authentication of the user should be requested, based at least on a property of the requested transaction.

When it is determined that authentication of the user should be requested, the method proceeds to step S5008. Alternatively, if authentication of the user is not required, the method proceeds to, and ends with, step S5012.

In step S5008, the method comprises transmitting a request for authentication of the user to the electronic device identified by the electronic device identifier.

Once this has been transmitted, the method proceeds to step S5010.

In step S5010, the method comprises transmitting a transaction instruction to the automated teller machine based on a condition of a response to the request for authentication of the user.

Finally, the method proceeds to, and ends with, step S5012.

It will be appreciated that, alternatively, after steps S5006 and S5010, instead of proceeding to step S5012, the method according to embodiments of the disclosure may comprise returning to step S5000 and awaiting reception of a further transaction request from the automated teller machine.

### <System>

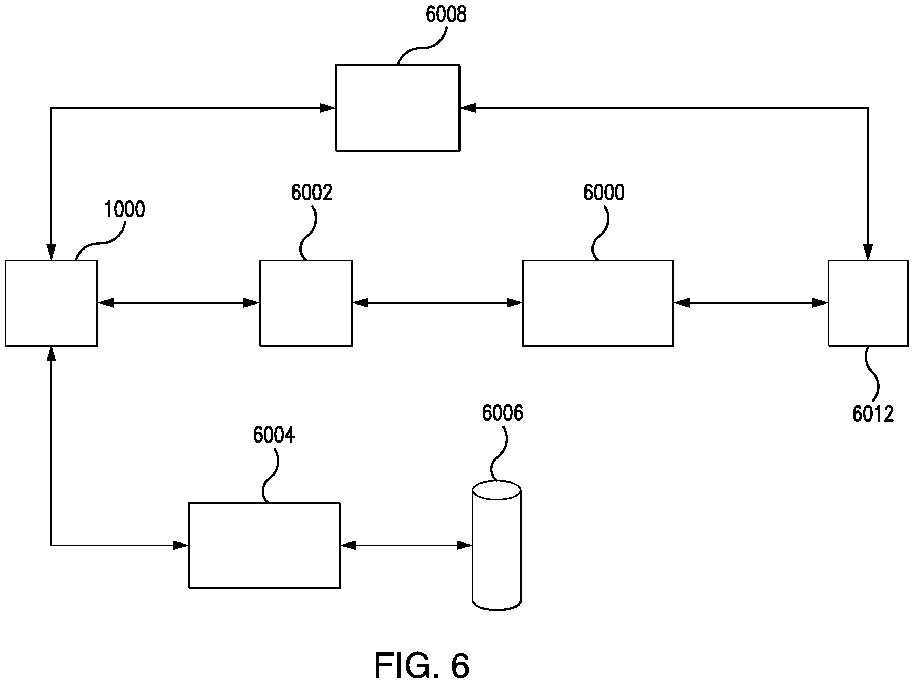

In some examples, the apparatus 1000 may be integrated within pre-existing payment system such as that illustrated in Figure 6 of the present disclosure.

In Figure 6, a customer (e.g. cardholder) in possession of an electronic device 6006 inserts their bank card into an ATM and operates the ATM in order to perform a transaction. Usage of the ATM is reported to the ATM Acquirer 6000. The ATM Acquirer is a financial institution who operates the ATM at which the requested transaction has been initiated by the customer.

In this example situation, the ATM acquirer may communicate with a switching service 6002 (such as a LINK switch) which is used in order to process ATM transactions from a network of ATMs. Communication between the ATM Acquirer and the switching service may be performed over a payment network (including suitable payment rails). Furthermore, having identified the issuer of the bank card used by the consumer, the LINK switch may communicate with the issuer over the payment network in order to inform the issuer of the requested transaction. The issuer may use an apparatus such as apparatus 1000 for reducing fraudulent transactions.

In examples, the issuer may communicate with an analytics provider 6004 in order to determine whether additional authentication for an ATM transaction should be requested. However, in other examples, the determination as to whether request additional authentication may be made by apparatus 1000 internally. Regardless, in this example, the apparatus 1000 operated by the issuer sends details regarding the requested transaction to the analytics provided for determination as to whether additional authentication should be requested.

In this example, the analytics provider 6004 is able to access, over an internal network, a storage such as database 6006, comprising transactional data (e.g. data regarding transactions which have been requested through the switching service 6002). Comparison of the requested transaction with previous transactions that have been requested through the switching service enables the analytics provider to identify trends in the requested transaction. That is, for example, if a series of suspicious transactions have occurred within a short amount of time in a certain geographical location (e.g. from a certain ATM or cluster of ATMs) the analytics provider may be able to identify that the requested transaction from a certain ATM is more likely to be a fraudulent transaction. In other words, the analytics provider may have access to certain information which is not available to the issuer (that is, which is not available directly to apparatus 1000) which enables potentially fraudulent ATM transactions to be more effectively identified.

Once the requested transaction has been analysed, the analytics provider informs apparatus 1000 whether or not to request additional authentication of the consumer.

When additional authentication has been requested, in this example situation, apparatus 1000 may communicate with an existing (or pre-installed) application programming interface (API) 6008 on an electronic device associated with the account from which the transaction is requested. This may be, for example, a banking application installed on the consumer's electronic device. In turn, the banking application may provide a push notification to alert the customer to the requested transaction- this may require the consumer to provide authentication in response.

Upon receipt of an authentication response from the API on the user's electronic device, apparatus 1000 may, on behalf of the issuer, instruct the ATM at which the transaction was requested (through the switching service 6002) whether or not to perform the requested transaction. As such, in the event whereby a fraudster attempts to use an ATM to perform a fraudulent transaction, the fraudulent transaction can be prevented in a substantially real time environment, even when the fraudster is in possession of a stolen bank card (or copy thereof) and associated PIN.

Furthermore, certain aspects of the present disclosure may be arranged in accordance with the following numbered clauses:
1) An electronic device for instructing performance of a transaction which has been requested at an automated teller machine, the electronic device comprising circuitry configured to:
   receive a transaction request, requesting a transaction, in response to a user initiating a transaction at an automated teller machine, the transaction request conforming to a transaction request protocol and including at least a first field for the value of the transaction and a second field for identification of an account for which the transaction is requested;
   retrieve from storage, based on the transaction request, an electronic device identifier associated with the account for which the transaction is requested;
   determine whether authentication of the user should be requested based at least on a property of the requested transaction;
   and, when it is determined that authentication of the user should be requested, the circuitry is further configured to:
      transmit a request for authentication of the user to the electronic device identified by the electronic device identifier;
      and transmit a transaction instruction to the automated teller machine based on a condition of a response to the request for authentication of the user.
2) The electronic device according to Clause 1, wherein the condition of the response is whether a response to the request for authentication of the user is received within a predetermined time of the request for authentication of the user.
3) The electronic device according to Clause 2, wherein when a response to the request for authentication of the user is received within the predetermined time, and when the response is indicative of an unsuccessful authentication of the user, the transaction instruction instructs the automated teller machine not to perform the transaction.
4) The electronic device according to Clause 2 or 3, wherein when a response to the request for authentication of the user is received within the predetermined time, and when the response is indicative of a successful authentication of the user, the transaction instruction instructs the automated teller machine to perform the transaction.
5) The electronic device according to Clause 2, 3 or 4, wherein when a response to the request for authentication of the user is not received within the predetermined time, the transaction instruction instructs the automated teller machine to perform the transaction.
6) The electronic device according to Clause 4 or 5, wherein the transaction instruction instructs the automated teller machine to perform the transaction only when the transaction request is successfully authorized.
7) The electronic device according to Clause 6, wherein the transaction request is successfully authorized when the transaction request incudes, in a third field, a security hash and when the security hash matches a hash associated with the account for which the transaction is requested.
8) The electronic device according to Clause 5, 6 or 7, wherein when a response to the request for authentication of the user indicative of an unsuccessful authentication of the user is received after the transaction has been performed, the circuitry is further configured to generate a notification message reporting the transaction as a fraudulent transaction.
9) The electronic device according to any preceding Clause, wherein determination whether authentication of the user should be requested is based on a geographical location of the automated teller machine.
10) The electronic device according to any preceding Clause, wherein the circuitry is further configured to:
   transmit a notification to the electronic device associated with the account identifier requesting a location of the electronic device; and
   determine whether authentication of the user should be requested based the location of the electronic device.
11) The electronic device according to any preceding Clause, wherein determination whether authentication of the user should be requested is based on a fraud score calculated for the requested transaction.
12) The electronic device according to any preceding Clause, wherein determination whether authentication of the user should be requested is based on an outcome of a machine learning model in response to the requested transaction.
13) The electronic device according to any preceding Clause, wherein the circuitry is configured to:
   transmit a ping to the electronic device; and
   transmit the authentication request to the electronic device when a response is received to the ping within a predetermined time.
14) A method of instructing performance of a transaction which has been requested at an automated teller machine, the method comprising:
   receiving a transaction request, requesting a transaction, in response to a user initiating a transaction at an automated teller machine, the transaction request conforming to a transaction request protocol and
   including at least a first field for the value of the transaction and a second field for identification of an account for which the transaction is requested;
   retrieving from storage, based on the transaction request, an electronic device identifier associated with the account for which the transaction is requested;
   determining whether authentication of the user should be requested based at least on a property of the requested transaction;
   and, when it is determined that authentication of the user should be requested, the method further comprises:
      transmitting a request for authentication of the user to the electronic device identified by the electronic device identifier;
      and transmitting a transaction instruction to the automated teller machine based on a condition of a response to the request for authentication of the user.
15) A computer program product comprising instructions which, when the program is executed by the computer, cause the computer to carry out a method of instructing performance of a transaction which has been requested at an automated teller machine, the method comprising:
   receiving a transaction request, requesting a transaction, in response to a user initiating a transaction at an automated teller machine, the transaction request conforming to a transaction request protocol and including at least a first field for the value of the transaction and a second field for identification of an account for which the transaction is requested;
   retrieving from storage, based on the transaction request, an electronic device identifier associated with the account for which the transaction is requested;
   determining whether authentication of the user should be requested based at least on a property of the requested transaction;
   and, when it is determined that authentication of the user should be requested, the method further comprises:
      transmitting a request for authentication of the user to the electronic device identified by the electronic device identifier;
      and transmitting a transaction instruction to the automated teller machine based on a condition of a response to the request for authentication of the user.

Obviously, numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

## Claims

1. An electronic device for instructing performance of a transaction which has been requested at an automated teller machine, the electronic device comprising circuitry configured to:
receive a transaction request, requesting a transaction, in response to a user initiating a transaction at an automated teller machine, the transaction request conforming to a transaction request protocol and including at least a first field for the value of the transaction and a second field for identification of an account for which the transaction is requested;
retrieve from storage, based on the transaction request, an electronic device identifier associated with the account for which the transaction is requested;
determine whether authentication of the user should be requested based at least on a property of the requested transaction;
and, when it is determined that authentication of the user should be requested, the circuitry is further configured to:
transmit a request for authentication of the user to the electronic device identified by the electronic device identifier;
and transmit a transaction instruction to the automated teller machine based on a condition of a response to the request for authentication of the user.

2. The electronic device according to Claim 1, wherein the condition of the response is whether a response to the request for authentication of the user is received within a predetermined time of the request for authentication of the user.

3. The electronic device according to Claim 2, wherein when a response to the request for authentication of the user is received within the predetermined time, and when the response is indicative of an unsuccessful authentication of the user, the transaction instruction instructs the automated teller machine not to perform the transaction.

4. The electronic device according to Claim 2, wherein when a response to the request for authentication of the user is received within the predetermined time, and when the response is indicative of a successful authentication of the user, the transaction instruction instructs the automated teller machine to perform the transaction.

5. The electronic device according to Claim 2, wherein when a response to the request for authentication of the user is not received within the predetermined time, the transaction instruction instructs the automated teller machine to perform the transaction.

6. The electronic device according to Claims 4 and 5, wherein the transaction instruction instructs the automated teller machine to perform the transaction only when the transaction request is successfully authorized.

7. The electronic device according to Claim 6, wherein the transaction request is successfully authorized when the transaction request incudes, in a third field, a security hash and when the security hash matches a hash associated with the account for which the transaction is requested.

8. The electronic device according to Claim 5, wherein when a response to the request for authentication of the user indicative of an unsuccessful authentication of the user is received after the transaction has been performed, the circuitry is further configured to generate a notification message reporting the transaction as a fraudulent transaction.

9. The electronic device according to Claim 1, wherein determination whether authentication of the user should be requested is based on a geographical location of the automated teller machine.

10. The electronic device according to Claim 1, wherein the circuitry is further configured to:
transmit a notification to the electronic device associated with the account identifier requesting a location of the electronic device; and
determine whether authentication of the user should be requested based the location of the electronic device.

11. The electronic device according to Claim 1, wherein determination whether authentication of the user should be requested is based on a fraud score calculated for the requested transaction.

12. The electronic device according to Claim 1, wherein determination whether authentication of the user should be requested is based on an outcome of a machine learning model in response to the requested transaction.

13. The electronic device according to Claim 1, wherein the circuitry is configured to:
transmit a ping to the electronic device; and
transmit the authentication request to the electronic device when a response is received to the ping within a predetermined time.

14. A method of instructing performance of a transaction which has been requested at an automated teller machine, the method comprising:
receiving a transaction request, requesting a transaction, in response to a user initiating a transaction at an automated teller machine, the transaction request conforming to a transaction request protocol and including at least a first field for the value of the transaction and a second field for identification of an account for which the transaction is requested;
retrieving from storage, based on the transaction request, an electronic device identifier associated with the account for which the transaction is requested;
determining whether authentication of the user should be requested based at least on a property of the requested transaction;
and, when it is determined that authentication of the user should be requested, the method further comprises:
transmitting a request for authentication of the user to the electronic device identified by the electronic device identifier;
and transmitting a transaction instruction to the automated teller machine based on a condition of a response to the request for authentication of the user.

15. A computer program product comprising instructions which, when the program is executed by the computer, cause the computer to carry out a method of instructing performance of a transaction which has been requested at an automated teller machine, the method comprising:
receiving a transaction request, requesting a transaction, in response to a user initiating a transaction at an automated teller machine, the transaction request conforming to a transaction request protocol and including at least a first field for the value of the transaction and a second field for identification of an account for which the transaction is requested;
retrieving from storage, based on the transaction request, an electronic device identifier associated with the account for which the transaction is requested;
determining whether authentication of the user should be requested based at least on a property of the requested transaction;
and, when it is determined that authentication of the user should be requested, the method further comprises:
transmitting a request for authentication of the user to the electronic device identified by the electronic device identifier;
and transmitting a transaction instruction to the automated teller machine based on a condition of a response to the request for authentication of the user.
